# EUROPÄISCHE PATENTSCHRIFT

(11) **EP 2 688 759 B1**
(45) Veröffentlichungstag und Bekanntmachung des Hinweises auf die Patenterteilung: **15.10.2014**
(21) Anmeldenummer: 12707494.6
(22) Anmeldetag: 06.03.2012
(51) Int. Cl.: B60J 10/08, B60J 10/00

(54) **PROFILDICHTUNG MIT ZIERLEISTE FÜR EIN FAHRZEUG**
PROFILE SEAL HAVING TRIM STRIP FOR A VEHICLE
PROFIL D'ÉTANCHÉITÉ DOTÉ D'UN LISTEL POUR UN VÉHICULE

(30) Priorität: 19.03.2011 DE 102011014540
(43) Veröffentlichungstag der Anmeldung: 29.01.2014
(73) Patentinhaber: Audi AG, 85045 Ingolstadt (DE)
(72) Erfinder: FRANZEN, Otto, 85055 Ingolstadt (DE)
(86) Internationale Anmeldenummer: PCT/EP2012/000989
(87) Internationale Veröffentlichungsnummer: WO 2012/126572

(56) Entgegenhaltungen:
- DE-A1- 3 432 592
- DE-A1- 3 604 389
- DE-A1- 4 339 033

## Beschreibung

Die vorliegende Erfindung betrifft eine Profildichtung mit Zierleiste für ein Fahrzeug, aufweisend einen Klemmabschnitt zur Befestigung der Profildichtung an einem Fahrzeugbauteil, mindestens einen Dichtabschnitt zur dichtenden Anlage an zumindest einem korrespondierenden Fahrzeugbauteil, sowie einen Halteabschnitt zur formschlüssigen Aufnahme der Zierleiste, wobei der Halteabschnitt entlang seiner Längserstreckung mindestens einen härteren Teilabschnitt aufweist.

Derartige Profildichtungen werden im Fahrzeugbau zur Abdichtung von Spalten zwischen aneinander liegenden Fahrzeugbauteilen verwendet. An der Profildichtung ist weiterhin eine dekorative Zierleiste formschlüssig angeordnet.

Die DE 43 39 033 A1, WO 2011/021021 A1, DE 600 12 173 T2 und DE 27 58 850 A1 zeigen jeweils Profildichtungen mit formschlüssig befestigten Zierleisten, wobei die Zierleisten in der Regel mit einem C-förmigen Querschnitt zur Hinterhakung an einem Halteabschnitt ausgebildet sind. Als nachteilig hat es sich bisher erwiesen, dass die Zierleisten vergleichsweise leicht von dem Halteabschnitt abgezogen werden können, was den Diebstahl solcher Zierleisten fördert.

Die DE 102 58 825 B3 beschreibt eine Dichtungsanordnung, insbesondere zum Abdichten und Führen einer Fensterscheibe eines Kraftfahrzeugs, mit einer Dichtung, die aus einem elastisch verformbaren Werkstoff besteht und einen mit Ausnehmungen versehenen Halteabschnitt aufweist, und einer Zierleiste, die den Halteabschnitt teilweise umschließt und einen oberen Schenkel und einen unteren Schenkel aufweist, die mit ihren hakenförmigen Vorsprüngen formschlüssig in die Ausnehmungen des Halteabschnitts eingreifen, wobei der Halteabschnitt mit einer Hohlkammer versehen ist. An den jeweiligen Enden des Halteabschnitts kann ein Verriegelungskörper axial in die Hohlkammer eingeführt werden, der den Halteabschnitt in diesen Bereichen versteift.

Nachteilig an der gezeigten Dichtungsanordnung ist jedoch, dass der Verriegelungskörper ein zusätzliches Bauteil darstellt, was das Handling der Dichtungsanordnung erschwert und den Aufbau insgesamt komplexer gestaltet. Zudem kann der Halteabschnitt damit nur an den Enden versteift werden.

Die gattungsbildende DE 34 32 592 A1 offenbart eine Profildichtung mit Zierleiste für ein Fahrzeug, aufweisend einen Klemmabschnitt zur Befestigung der Profildichtung an einem Fahrzeugbauteil, mindestens einen Dichtabschnitt zur dichtenden Anlage an zumindest einem korrespondierenden Fahrzeugbauteil, sowie einen Halteabschnitt zur formschlüssigen Aufnahme der Zierleiste, wobei der Halteabschnitt entlang seiner Längserstreckung mindestens einen härteren Teilabschnitt aufweist, der als ein Einlegeteil ausgebildet ist, das aus einem härteren Werkstoff, als der übrige Halteabschnitt besteht. Der Teilabschnitt ist als eine lange T-förmige Leiste mit einer Nut zur Aufnahme der Zierleiste ausgebildet. Dies bedingt eine aufwändigere Herstellung, da die Zierleiste in der Profildichtung gehalten werden muss. Gleiches gilt für die ähnlich aufgebaute Profildichtung der DE 36 04 389 A1.

Aufgabe der vorliegenden Erfindung ist es daher eine Profildichtung mit Zierleiste für ein Fahrzeug bereitzustellen, die möglichst unauffällig gegen ein unerwünschtes Abziehen gesichert ist, aber dennoch eine einfache Montage gewährleistet.

Diese Aufgabe wird durch die Merkmale des Patentanspruchs 1 gelöst.

Ein Fahrzeug mit einer erfindungsgemäßen Profildichtung ist in Patentanspruch 7 beansprucht.

Profildichtung mit Zierleiste für ein Fahrzeug, aufweisend einen Klemmabschnitt zur Befestigung der Profildichtung an einem Fahrzeugbauteil, mindestens einen Dichtabschnitt zur dichtenden Anlage an zumindest einem korrespondierenden Fahrzeugbauteil, sowie einen Halteabschnitt zur formschlüssigen Aufnahme der Zierleiste, wobei der Halteabschnitt entlang seiner Längserstreckung mindestens einen härteren Teilabschnitt aufweist und wobei der Teilabschnitt als ein Einlegeteil ausgebildet ist, das aus einem härteren Werkstoff, als der übrige Halteabschnitt besteht. Das Einlegeteil und der Halteabschnitt weisen einen identisch geformten Querschnitt auf.

Indem der Halteabschnitt abschnittsweise verhärtet ist, kann die für das Abziehen der Zierleiste benötigte Kraft gezielt auf ein ausreichend sicheres Maß erhöht werden. Ein separates Einlegeteil bietet Vorteile bei der Herstellung, da das Einlegeteil und der restliche Halteabschnitt aus unterschiedlich harten und steifen Werkstoffen bestehen. Die Wahl der Länge und des Werkstoffs des Teilabschnitts erlaubt die Einstellung des benötigten Kraftaufwands bei der Montage und einem eventuellen Diebstahlversuch. Der Halteabschnitt wird von der Zierleiste im eingebauten Zustand gänzlich überdeckt, wodurch eine besonders unauffällige Sicherung der Zierleiste gewährleistet ist.

In einer bevorzugten Ausführung verrastet das Einlegeteil mit dem Halteabschnitt. Dadurch kann eine erfindungsgemäße Profildichtung besonders einfach gefertigt werden.

In einer bevorzugten Ausführung wird das Einlegeteil durch teilweise Umspritzung mit der Profildichtung gehalten. Indem das Einlegeteil umspritzt wird, kann eine erfindungsgemäße Profildichtung besonders einfach und kostengünstig hergestellt werden. Zusammen mit dem Einlegeteil kann eine Endkappe zum seitlichen Abschluss der Profildichtung mit umspritzt werden. Dazu wird das Einlegeteil und die extrudierte Profildichtung in das Werkzeug eingelegt und die Endkappe so angespritzt, dass das Einlegeteil von der Endkappe gehalten wird

In einer bevorzugten Ausführung weist der Halteabschnitt eine Hinterschneidung auf, in die die Zierleiste eingreifen kann. Der Halteabschnitt weist einen pilzförmigen Querschnitt auf, in den eine im Wesentlichen c-förmige Zierleiste formschlüssig eingreifen kann.

In einer bevorzugten Ausführung ist der Teilabschnitt in einem endständigen Randbereich an der Profildichtung angeordnet. Der Teilabschnitt ist in einem solchen Randbereich besonders einfach anzuordnen und bietet gleichzeitig eine gute Abzugssicherung, da oftmals versucht wird die Zierleiste an ihrem Ende abzuheben.

Ein Fahrzeug mit einer erfindungsgemäßen Profildichtung weist diese vorzugsweise im Bereich der Fensterscheiben auf, wobei der Dichtabschnitt an einer Fensterscheibe anliegt und der Klemmabschnitt von einem Türrahmen gehalten wird.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine Schnittansicht einer Profildichtung mit Zierleiste;
Fig. 2a eine Draufsicht auf eine Profildichtung ohne Zierleiste;
Fig. 2b eine Draufsicht auf eine Profildichtung mit Zierleiste.

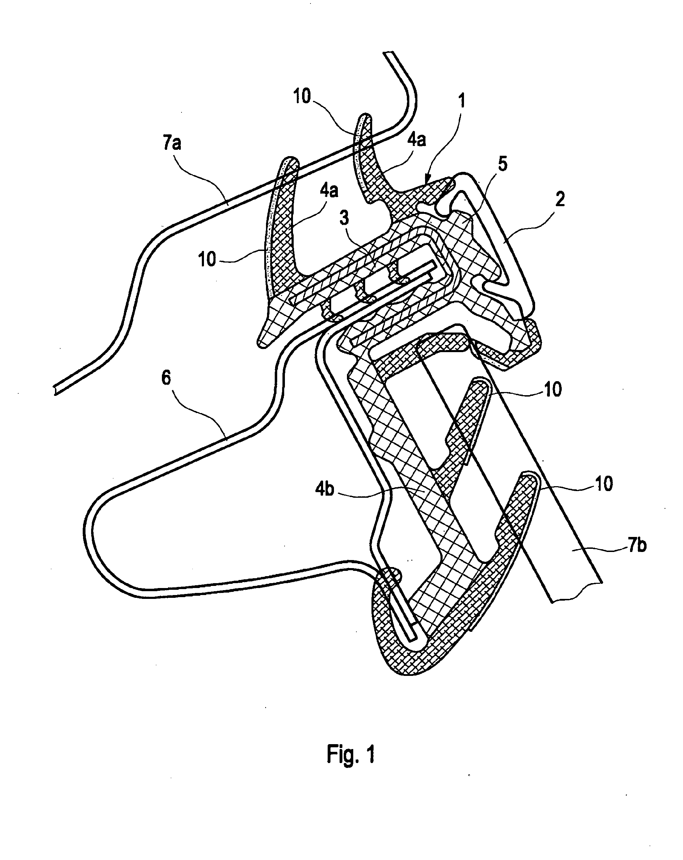

Gemäß der Fig. 1 hat eine Profildichtung 1 mit Zierleiste 2 für ein Fahrzeug einen Klemmabschnitt 3 zur form- bzw. kraftschlüssigen Befestigung an einem Fahrzeugbauteil 6. Ausgehend von dem Klemmabschnitt 3 liegt ein erster Dichtabschnitt 4a, bestehend aus zwei Dichtlippen, dichtend an einem korrespondierenden Karosserieelement 7a an, während ein zweiter Dichtabschnitt 4b, ebenfalls aus zwei Dichtlippen bestehend, an einer Verglasung 7b dichtend anliegt. Die Dichtabschnitte 4a und 4b sind jeweils mit einer reibungsmindernden Beflockung 10 beschichtet. Ein Halteabschnitt 5 trägt eine von außerhalb des Fahrzeugs sichtbare dekorative Zierleiste 2. Der Halteabschnitt 5 weist einen im Wesentlichen pilzförmigen Querschnitt mit Hinterschneidungen auf, in die die c-förmige Zierleiste 2 formschlüssig eingreifen kann.

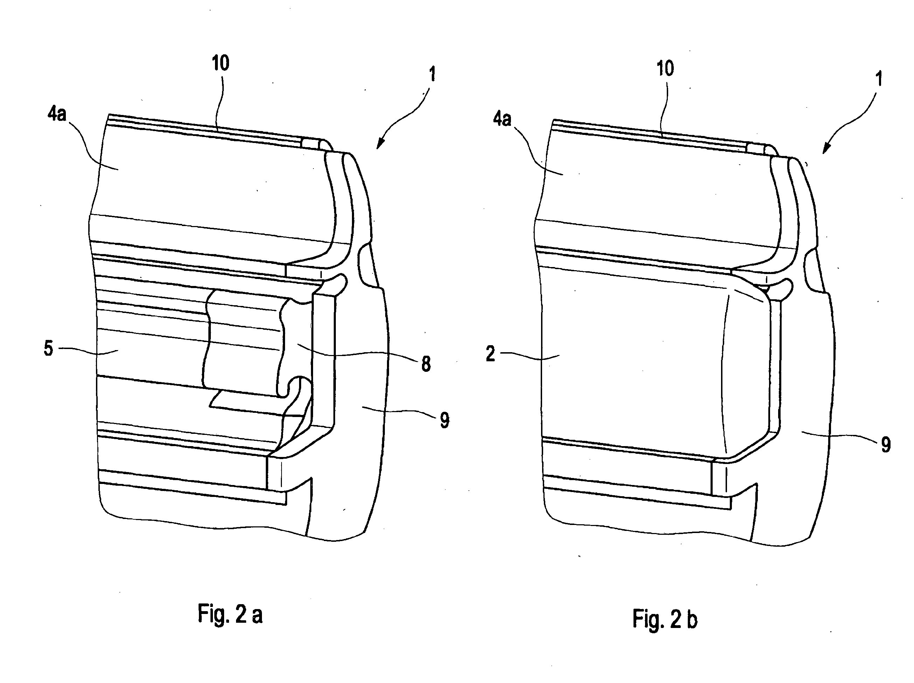

Wie der Fig. 2a zu entnehmen ist, weist der Halteabschnitt 5 weiterhin ein identisch geformtes Einlegeteil 8 auf, das in einem endständigen Randbereich an der Profildichtung 1 angeordnet ist. Das Einlegeteil 8 besteht aus einem härteren und steiferen Werkstoff, als der restliche Halteabschnitt 5 und ist mit diesem verrastet. Die gesamte Profildichtung 1 wird von einer Endkappe 9 seitlich abgeschlossen. In der Fig. 2b trägt der Halteabschnitt 5 die Zierleiste 2, wobei die Zierleiste 2 den Halteabschnitt 5 und das Einlegeteil 8 gänzlich verdeckt. Die Profildichtung 1 ist bevorzugt nach dem Verfahren der Coextrusion herzustellen.

### Liste der Bezugszeichen:

- 1: Profildichtung
- 2: Zierleiste
- 3: Klemmabschnitt
- 4a: erster Dichtabschnitt
- 4b: zweiter Dichtabschnitt
- 5: Halteabschnitt
- 6: Fahrzeugbauteil
- 7a: Karosserieelement
- 7b: Verglasung
- 8: Einlegeteil
- 9: Endkappe
- 10: Gleitbeschichtung

## Patentansprüche

1. Profildichtung (1) mit Zierleiste (2) für ein Fahrzeug, aufweisend einen Klemmabschnitt (3) zur Befestigung der Profildichtung (1) an einem Fahrzeugbauteil (6), mindestens einen Dichtabschnitt (4a, 4b) zur dichtenden Anlage an zumindest einem korrespondierenden Fahrzeugbauteil (7a, 7b), sowie einen Halteabschnitt (5) zur formschlüssigen Aufnahme der Zierleiste (2), wobei der Halteabschnitt (5) entlang seiner Längserstreckung mindestens einen härteren Teilabschnitt aufweist, der als ein Einlegeteil (8) ausgebildet ist, das aus einem härteren Werkstoff, als der übrige Halteabschnitt (5) besteht, **dadurch gekennzeichnet, dass** das Einlegeteil (8) und der Halteabschnitt (5) einen identisch geformten Querschnitt aufweisen.

2. Profildichtung nach Anspruch 1, **dadurch gekennzeichnet, dass** das Einlegeteil (8) mit dem Halteabschnitt (5) verrastet.

3. Profildichtung nach einem Anspruch 1, **dadurch gekennzeichnet, dass** das Einlegeteil (8) durch teilweise Umspritzung mit der Profildichtung (1) gehalten wird.

4. Profildichtung nach Anspruch 1, **dadurch gekennzeichnet, dass** das Einlegeteil (8) zusammen mit einer Endkappe (9) durch teilweise Umspritzung mit der Profildichtung (1) gehalten wird.

5. Profildichtung nach einem der Ansprüche 1 bis 4, **dadurch gekennzeichnet, dass** der Halteabschnitt (5) eine Hinterschneidung aufweist, in die die Zierleiste (2) eingreifen kann.

6. Profildichtung nach einem der Ansprüche 1 bis 5, **dadurch gekennzeichnet, dass** der Teilabschnitt (8) in einem endständigen Randbereich der Profildichtung (1) angeordnet ist.

7. Fahrzeug mit einer Profildichtung (1) nach Anspruch 1.

## Claims

1. Profile seal (1) having a trim strip (2) for a vehicle, comprising a clamping portion (3) for fastening the profile seal (1) to a vehicle component (6), at least one sealing portion (4a, 4b) to be applied in a sealing manner to at least one corresponding vehicle component (7a, 7b), and a holding portion (5) for receiving the trim strip (2) in an interlocking manner, the holding portion (5) comprising at least one relatively hard sub-portion along the longitudinal extension thereof, which sub-portion is in the form of an insert (8) which consists of a harder material than the rest of the holding portion (5), **characterised in that** the insert (8) and the holding portion (5) have an identically shaped cross section.

2. Profile seal according to claim 1, **characterised in that** the insert (8) latches with the holding portion (5).

3. Profile seal according to claim 1, **characterised in that** the insert (8) is held by being overmoulded in part with the profile seal (1).

4. Profile seal according to claim 1, **characterised in that** the insert (8) is held together with an end cap (9) by being overmoulded in part with the profile seal (1).

5. Profile seal according to any of claims 1 to 4, **characterised in that** the holding portion (5) comprises an undercut in which the trim strip (2) can engage.

6. Profile seal according to any of claims 1 to 5, **characterised in that** the sub-portion (8) is arranged in an end-side edge region of the profile seal (1).

7. Vehicle comprising a profile seal (1) according to claim 1.

## Revendications

1. Joint d'étanchéité profilé (1) avec une moulure enjoliveuse (2) pour un véhicule, présentant une section de blocage (3) pour fixer le joint d'étanchéité profilé (1) sur une pièce de véhicule (6), au moins une section étanche (4a, 4b) pour application étanche sur au moins une pièce de véhicule correspondante (7a, 7b), ainsi qu'une section de retenue (5) pour recevoir la moulure enjoliveuse (2) avec adaptation de formes, dans lequel la section de retenue (5) présente le long de son extension longitudinale au moins une section partielle plus dure qui se présente sous la forme d'une pièce d'insertion (8) qui est constituée d'un matériau plus dur que la section de retenue restante (5), **caractérisé en ce que** la pièce d'insertion (8) et la section de retenue (5) présentent une section transversale de forme identique.

2. Joint d'étanchéité profilé selon la revendication 1, **caractérisé en ce que** la pièce d'insertion (8) s'enclenche sur la section de retenue (5).

3. Joint d'étanchéité profilé selon la revendication 1, **caractérisé en ce que** la pièce d'insertion (8) est solidarisée avec le joint d'étanchéité profilé (1) par enrobage partiel par extrusion.

4. Joint d'étanchéité profilé selon la revendication 1, **caractérisé en ce que** la pièce d'insertion (8) est solidarisée avec le joint d'étanchéité profilé (1) par enrobage partiel par extrusion, conjointement avec une coiffe d'extrémité (9).

5. Joint d'étanchéité profilé selon l'une quelconque des revendications 1 à 4, **caractérisé en ce que** la section de retenue (5) présente une contre-dépouille dans laquelle la moulure enjoliveuse (2) peut s'engager.

6. Joint d'étanchéité profilé selon l'une quelconque des revendications 1 à 5, **caractérisé en ce que** la section partielle (8) est aménagée dans une zone marginale terminale du joint d'étanchéité profilé (1).

7. Véhicule doté d'un joint d'étanchéité profilé (1) selon la revendication 1.
